# EUROPEAN PATENT APPLICATION

(11) **EP 4 535 473 A1**
(43) Date of publication of application: **09.04.2025**
(21) Application number: 23824204.4
(22) Date of filing: 13.06.2023
(51) Int. Cl.: H01M 10/04, H01M 50/463, H01M 50/586, H01M 50/59

(54) **ELECTRODE ASSEMBLY, AND METHOD FOR MANUFACTURING ELECTRODE ASSEMBLY**

(30) Priority: 14.06.2022 KR 20220072076; 09.06.2023 KR 20230074431
(71) Applicant: LG Energy Solution, Ltd., Seoul 07335 (KR)
(72) Inventor: JUNG, Jea Bong, Daejeon 34122 (KR); AHN, Chang Bum, Daejeon 34122 (KR); CHOI, Byungman, Daejeon 34122 (KR); NOH, Soyeon, Daejeon 34122 (KR); JEONG, Ei-Rak, Daejeon 34122 (KR); WOO, Minki, Daejeon 34122 (KR)
(74) Representative: Plasseraud IP
(86) International application number: PCT/KR2023/008112
(87) International publication number: WO 2023/243988

(57) **Abstract**

The present invention provides an electrode assembly including: a stack 100 formed by aligning and alternately stacking a plurality of electrodes 110 and a plurality of separators 120 in a first direction, and a wrapping film 200 surrounding and fused to the stack 100 to fix the plurality of electrodes 110 and the plurality of separators 120. Electrode tabs 112 of the plurality of electrodes 110 are disposed at one side or the other side of the stack 100 in a second direction intersecting with the first direction. The wrapping film 200 surrounds one side and the other side of the stack 100 in the first direction; and one side and the other side of the stack 100 in a third direction intersecting the first direction and the second direction, and is fused to at least the one side or the other side of the stack 100 in the first direction. Thus, deformation and damage of the separator 120, disruption of the alignment of the stack 100, and short circuit resulting therefrom may be prevented.

## Description

### [TECHNICAL FIELD]

This application claims the benefit of priority based on Korean Patent Application No. 10-2022-0072076, dated June 14, 2022, Korean Patent Application No. 10-2023-0074431, dated June 9, 2023, and entire contents disclosed in the documents of the patent applications are included as a part of this specification.

The present invention relates to an electrode assembly and a manufacturing method of an electrode assembly, and more particularly, to an electrode assembly and a manufacturing method of an electrode assembly that prevents deformation and damage of the separator, disruption of the alignment of the stack, and short circuit resulting therefrom.

### [BACKGROUND ART]

A secondary battery refers to a battery that may be charged and discharged, unlike primary batteries that cannot be recharged. These secondary batteries are used in small, high-tech electronic devices such as mobile phones, PDAs and laptop computers as well as in energy storage systems (ESS), electric vehicles (EV) or hybrid electric vehicles (HEV) as a power source.

To manufacture these secondary batteries, anode and cathode are first manufactured by applying an electrode active material slurry to an anode current collector and a cathode current collector, and the anode and the cathode are stacked on both sides of a separator to form an electrode assembly of a predetermined shape. Thereafter, the electrode assembly is accommodated in a battery case, electrolyte is injected, and the battery case is sealed.

There are various types of electrode assemblies used in pouch type secondary batteries. Among these, the lamination & stack type (L&S) electrode assembly is manufactured by first manufacturing unit cells using anodes, separators and cathodes, and then stacking the unit cells.

Conventionally, the unit cells frequently deviated from their original positions resulting in degradation of alignment due to no or very weak adhesive force among the stacked unit cells.

However, when a tape is attached, the separator was partially bent by the tape, causing the separator or electrode to be damaged or short-circuited. In addition, there was a problem that the tape T easily separated from the stack of the unit cells during the injection process of electrolyte or degassing process, thereby deforming the separator 120 and causing a short circuit.

Korean Patent Application Publication No. 10-2021-0127532 discloses an electrode assembly in which a plurality of unit cells are stacked by being bonded to one another through an adhesive for solving the above-described problem,

However, in the prior art, the unit cells must be aligned and stacked after applying adhesive to the unit cells, which increases manufacturing costs and manufacturing time.

### [PRIOR ART DOCUMENT]

### [PATENT DOCUMENT]

(Patent Document 0001) Korean Patent Application Publication 10-2021-0127532

### [DISCLOSURE]

### [TECHNICAL PROBLEM]

In order to solve the above-described problems, it is an object of the present invention to provide an electrode assembly that prevents deformation and damage of the separator, disruption of the alignment of the stack, and short circuit resulting therefrom.

It is an object of the present invention to provide an electrode assembly that firmly and straightly fixes an electrode and a separator in alignment.

It is an object of the present invention to provide an electrode assembly in which a wrapping film is strongly coupled to a stack.

It is an object of the present invention to provide an electrode assembly with a simple structure that may be easily manufactured at low cost, simplifies manufacturing equipment, reduces manufacturing costs, and shortens manufacturing time.

It is an object of the present invention to provide an electrode assembly wherein the performance of secondary batteries is not reduced and the lifespan is not shortened even when the stack is surrounded by a wrapping film.

It is an object of the present invention to provide an electrode assembly that increases the energy density of secondary batteries.

Objects of the present invention are not limited to the above-described objects, and other objects and advantages of the present invention will be understood by the following description and will be more definitely understood through the embodiments of the present invention. It is also to be easily understood that the objectives and advantages of the present invention may be realized and attained by means and a combination thereof described in the appended claims.

### [TECHNICAL SOLUTION]

In order to solve the above-described problems, the present invention provides an electrode assembly including a stack 100 and a wrapping film 200.

The stack 100 may be formed by stacking a plurality of electrodes 110 and a plurality of separators 120 alternately in a first direction.

The stack 100 may be formed by aligning and stacking the plurality of electrodes 110 and the plurality of separators 120 alternately in the first direction.

The wrapping film 200 surrounds the stack 100 and is fused to the stack 100 to fix the plurality of electrodes 110 and the plurality of separators 120.

An electrode tab 112 of each of the plurality of electrodes 110 may be disposed at one side or the other side of the stack 100 in a second direction that intersects the first direction.

The wrapping film 200 surrounds the one side and the other side of the stack 100 in the first direction and the one side and the other side of the stack 100 in a third direction that intersects the first direction and the second direction, and may be fused to the one side or the other side of the stack 100 at least in the first direction.

In one embodiment, the wrapping film 200 may be fused to the one side or the other side of the stack 100 in the first direction and to the one side or the other side of the stack 100 in the third direction.

In one embodiment, the wrapping film 200 may include a first wrapping film 210 and a second wrapping film 220.

The first wrapping film 210 may be bent to surround the one side of the stack 100 in the first direction; at least a portion of the one side of the stack 100 in the third direction and at least a portion of the other side of the stack 100 in the third direction.

The first wrapping film 210 may be fused to at least the one side of the stack 100 in the first direction.

The second wrapping film 220 may be bent to surround the other side of the stack 100 in the first direction; at least a portion of the one side of the stack 100 in the third direction and at least a portion of the other side of the stack 100 in the third direction.

The second wrapping film 220 may have two end portions overlapping two end portions of the first wrapping film 210 in the first direction on the one side and the other side of the stack 100 in the third direction.

The second wrapping film 220 may be fused to at least the other side of the stack 100 in the first direction and two overlapping end portions of the first wrapping film 210.

In one embodiment, the first wrapping film 210 may be fused to the one side of the stack 100 in the first direction, at least a portion of the one side of the stack 100 in the third direction, and at least a portion of the other side of the stack 100 in the third direction.

In one embodiment, each of the plurality of separators 120 may extend further than the plurality of electrodes 110 adj acent to each of the plurality of separators 120 in the one direction and the other direction of the third direction.

One end portion and the other end portion of at least a portion of the plurality of separators 120 in the third direction may be bent to be closer to or to be in contact with one end portion and the other end portion of plurality of adjacent separators 120 in the third direction when the wrapping film 200 is fused to the stack 100.

Each of the plurality of separators 120 may extend further than the plurality of electrodes 110 adjacent to each of the plurality of separators 120 in the one direction and the other direction of the third direction, and
One end portion or other end portion of each of two or more of the plurality of separators 120 in the third direction stacked consecutively in the first direction with one or more of the plurality of electrodes 110 therebetween may be bent altogether in the one direction or the other direction of the first direction when the wrapping film 200 is fused to the stack 100,

In one embodiment, the wrapping film 200 may extend in the second direction to surround an area corresponding to a predetermined section S of each of the plurality of separators 120 in the second direction.

The predetermined section S may be a section extending from a center to the one end portion and the other end portion of each the plurality of separators 120 in the second direction.

In one embodiment, the wrapping film 200 may be fused to at least a portion of the one end portion or the other end portion of the plurality of separators 120 in the third direction.

The wrapping film 200 may be fused long in the second direction to the one end portion or the other end portion of at least a portion of the plurality of separators 120 in the third direction corresponding to the predetermined section S.

In one embodiment, when the wrapping film 200 is fused to the stack 100, the first portion P1 of the predetermined section S of the one end portion of at least a portion of the separator 120 of the plurality of separators 120 in the third direction may be bent to be close to or to be in contact with an adjacent separator 120.

In addition, at least a second portion P2 of the predetermined section S of the other end portion of each at least a portion of the plurality of separators 120 in the third direction may be bent to be closer to or to be in contact with each of plurality of adjacent separators 120.

In one embodiment, the plurality of electrodes 110 may be located at the one end or other end of the stack 100 in the first direction.

The wrapping film 200 may be fused to one side surface or the other side surface of each of the plurality of electrodes 110 in the first direction located at the one end or the other end of the stack 100 in the first direction.

In one embodiment, the stack 100 may include a plurality of unit cells C aligned and stacked in the first direction.

Each of the plurality of unit cells C may include a portion of the plurality of electrodes 110 and a portion of the plurality of separators 120 stacked alternately.

The portion of the plurality of electrodes 110 and the portion of the plurality of separators 120 constituting each of the plurality of unit cells C may be bonded to one another.

The wrapping film 200 may surround the stack 100 and be fused to the stack 100 to fix the plurality of unit cells C.

In one embodiment, fusion may be performed by thermocompression.

In one embodiment, the wrapping film 200 may be made of a material containing polyethylene terephthalate (PET) and ethylene vinyl acetate (EVA).

In one embodiment, a bending resistance rigidity of the wrapping film 200 may be greater than those of the plurality of separators 120.

In addition, in order to solve the above-described problems, the present invention provides a manufacturing method S500 of an electrode assembly including a stacking step S510 and a wrapping step S520.

In the stacking step S510, the stack 100 may be formed.

In the wrapping step S520, the wrapping film 200 may surround the one side and the other side of the stack 100 in the first direction; and the one side and the other side of the stack 100 in the third direction with the wrapping film 200. In addition, the wrapping film 200 may be fused at least to the one side or the other side of the stack 100 in the first direction.

In one embodiment, the wrapping film 200 may include the first wrapping film 210 and the second wrapping film 220.

The wrapping step S520 may include a first wrapping step S522 and a second wrapping step S524.

In the first wrapping step S522, the first wrapping film 210 may be fused to the one side of the stack 100 in the first direction, at least a portion of one side of the stack 100 in the third direction; and at least a portion of the other side of the stack 100 in the third direction.

In the second wrapping step S524, the second wrapping film 220 may be fused to the one side of the stack 100 in the first direction and at least two end portions of the first wrapping film 210 on the one side and the other side of the stack 100 in the third direction after flipping the stack 100 to interchange the one side and the other side thereof in the first direction.

In one embodiment, the wrapping step S520 includes moving the roller R in the third direction on the one side of the stack 100 in the first direction to press and fuse the wrapping film 200 to the one side of the stack 100 in the first direction by thermocompression, and moving the roller R in the first direction on the one side and the other side of the stack 100 in the third direction to press and fuse the wrapping film 200 to at least a portion of the one side of the stack 100 in the third direction and at least a portion of the other side of the stack 100 in the third direction by thermocompression, after placing the wrapping film 200 on the one side of the stack 100 in the first direction and pressing and fixing with a fixing member Z a predetermined area of the wrapping film 200 placed on the one side of the stack 100 in the first direction.

In one embodiment, the wrapping step S520 includes moving the roller R in the first direction on the one side and the other side of the stack 100 in the third direction to press and fuse the wrapping film 200 to the wrapping film 200 already fused to the one side and the other side of the stack 100 in the third direction by thermocompression after placing the wrapping film 200 on the one side of the stack 100 in the first direction, and pressing and fixing with a fixing member Z a predetermined area of the wrapping film 200 placed on the one side of the stack 100 in the first direction.

In one embodiment, in the wrapping step S520, the wrapping film 200 may be heated to a first temperature and fused to the stack 100.

The first temperature may be higher than a second temperature to which one or more of the plurality of separators 120 may be heated for bonding to one or more of the plurality of electrodes 110.

In one embodiment, the first temperature may be equal to or higher than 110 degrees Celsius and lower than 160 degrees Celsius.

The second temperature may be equal to or higher than 80 degrees Celsius and lower than 110 degrees Celsius.

### [ADVANTAGEOUS EFFECTS]

According to embodiments of the present invention, an electrode assembly 10 may include: a stack 100 formed by aligning and alternately stacking a plurality of electrodes 110 and a plurality of separators 120 in a first direction; and a wrapping film 200 surrounding the stack 100 and may be fused to the stack 100 to fix the plurality of electrodes 110 and the plurality of separators 120.

Accordingly, since the wrapping film 200 surrounds and is fused to the stack 100, the electrodes 110 and the separators 120 in alignment may be firmly fixed and be protected. Accordingly, it is possible to prevent deformation and damage of the separator 120, disruption of the alignment of the stack 100, and short circuit resulting therefrom. In particular, even when a swelling phenomenon occurs where the electrode 110 swells after electrolyte wetting, the wrapping film 200 may fix and protect the stack 100 without falling off from the stack 100 thereby preventing the separator 120 from deformation and damage, and the stack 100 from disruption of the alignment and short circuit resulting therefrom.

In addition, since the electrodes 110 and the separators 120 in alignment may be firmly fixed by the wrapping film 200, the stack 100 may be prevented from bending when the electrode assembly 10 is transported. Accordingly, it is possible to prevent deformation and damage of the separator 120, and disruption of the alignment of the stack 100.

According to embodiments of the present invention, electrode tabs 112 of the plurality of electrodes 110 may be disposed at the one side or the other side of the stack 100 in the second direction intersecting with the first direction. The wrapping film 200 may surround: the one side and the other side of the stack 100 in the first direction; and the one side and the other side of the stack 100 in the third direction intersecting the first direction and the second direction, and may be fused to at least the one side or the other side of the stack 100 in the first direction.

Accordingly, the stack 100 may be facilitatively surrounded by the wrapping film 200 while avoiding the electrode tabs 112 of the electrode 110, and the wrapping film 200 may be facilitatively fused to the stack 100. Thus, the manufacturing of the electrode assembly 10 may be facilitated, and the manufacturing cost of the electrode assembly 10 may be reduced.

According to embodiments of the present invention, the wrapping film 200 may be fused to the one side or the other side of the stack 100 in the first direction and to the one side or the other side of the stack 100 in the third direction.

Accordingly, as the area where the wrapping film 200 is fused to the stack 100 or the number of separators 120 to which the wrapping film 200 is fused increases, the electrodes 110 and the separators 120 in alignment may be more firmly fixed. Thus, it is possible to prevent deformation and damage of the separator 120, disruption of the alignment of the stack 100, and short circuit resulting therefrom.

According to embodiments of the present invention, the wrapping film 200 may include a first wrapping film 210 and a second wrapping film 220. The first wrapping film 210 may be bent to surround: the one side of the stack 100 in the first direction; at least a portion of the one side of the stack 100 in the third direction; and at least a portion of the other side of the stack 100 in the third direction, and may be fused to at least the one side of the stack 100 in the first direction. The second wrapping film 220 may be bent to surround: the other side of the stack 100 in the first direction; at least a portion of the one side of the stack 100 in the third direction; and at least a portion of the other side of the stack 100 in the third direction, and has two end portions overlapping two end portions of the first wrapping film 210 in the first direction on the one side and the other side of the stack 100 in the third direction, and may be fused to: the other side of the stack 100 in the first direction; and at least two overlapping end portions of the first wrapping film 210.

Accordingly, by surrounding the stack 100 with two wrapping films 210 and 220 and fusing the two wrapping films 200 to the stack 100, the manufacturing of the electrode assembly 10 with a simple configuration may be facilitated at low cost.

According to embodiments of the present invention, the first wrapping film 210 may be fused to: the one side of the stack 100 in the first direction; at least a portion of the one side of the stack 100 in the third direction; and at least a portion of the other side of the stack 100 in the third direction.

Accordingly, as the area where the wrapping film 200 is fused to the stack 100 or the number of separators 120 to which the wrapping film 200 is fused increases, the electrodes 110 and the separators 120 in alignment may be more firmly fixed. Thus, it is possible to prevent deformation and damage of the separator 120, disruption of the alignment of the stack 100, and short circuit resulting therefrom.

According to embodiments of the present invention, each of the plurality of separators 120 may extend further than the plurality of electrodes 110 adjacent to each of the plurality of separators 120 in the one direction and the other direction of the third direction. The one end portion and the other end portion of at least a portion of the plurality of separators 120 in the third direction may be bent to be closer to or to be in contact with the one end portion and the other end portion of plurality of adjacent separators 120 in the third direction when the wrapping film 200 is fused to the stack 100.

Accordingly, since the wrapping film 200 surrounds the stack 100 while pressing the separator 120, the electrodes 110 and the separators 120 in alignment may be more firmly fixed. In addition, since the one end portion and the other end portion of the separator 120 in the third direction are fixed in a bent state by fixing the entirety of the center portion, the one end portion and the other end portion in the second direction of the one end portion and the other end portion of the separator 120 in the third direction, the pressure applied to the one side and the other side of the stack 100 in the third direction may be facilitatively absorbed. Since the one end portion and the other end portion of the separator 120 are placed close to the one end portion and the other end portion of the adjacent separator 120 in the third direction, the strength of the one side and the other side of the stack 100 in the third direction may increase. Thus, the stack 100 and the separators 120 may be protected. Accordingly, it is possible to prevent deformation and damage of the separator 120, disruption of the alignment of the stack 100, and short circuit resulting therefrom. In particular, even when a swelling phenomenon occurs where the electrode 110 swells after electrolyte wetting, the wrapping film 200 may fix and protect the stack 100 without falling off from the stack 100 thereby preventing the separator 120 from deformation and damage, and the stack 100 from disruption of the alignment and short circuit resulting therefrom. Additionally, the stack 100 may be prevented from bending when the electrode assembly 10 is transported. Accordingly, it is possible to prevent deformation and damage of the separator 120, and disruption of the alignment of the stack 100.

In addition, even when the alignment of the stack 100 is disrupted, the electrodes 110 (e.g., a pair of electrodes disposed on the one side and the other side of the separator in the first direction) are blocked by one bent end portion or the other bent end portion of the separator 120 in the third direction, thereby greatly reducing the possibility of direct electrical connection between the electrodes 110 and the battery case. Thus, short circuit may be prevented.

According to embodiments of the present invention, each of the plurality of separators 120 may extend further than the plurality of electrodes 110 adjacent to each of the plurality of separators 120 in the one direction and the other direction of the third direction. The one end portion or the other end portion of each of two or more of the plurality of separators 120 in the third direction stacked consecutively in the first direction with one or more of the plurality of electrodes 110 therebetween may be bent altogether in one direction or other direction of the first direction when the wrapping film 200 is fused to the stack 100.

Accordingly, since the wrapping film 200 surrounds the stack 100 while pressing the continuously stacked separators 120 in a similar direction, the electrodes 110 and the separators 120 in alignment are more firmly fixed. In addition, since the one end portion or the other end portion of the continuously stacked separators 120 in the third direction may be concentrated in the third direction, the strength of the one side and the other side of the stack 100 in the third direction is increased. Thus, the stack 100 and separators 120 may be protected. Accordingly, it is possible to prevent deformation and damage of the separator 120, disruption of the alignment of the stack 100, and short circuit resulting therefrom.

According to embodiments of the present invention, the wrapping film 200 may extend in the second direction to surround an area corresponding to a predetermined section S of each of the plurality of separators 120 in the second direction. The predetermined section S may be a section extending from a center to the one end portion and the other end portion of each the plurality of separators 120 in the second direction.

Accordingly, the wrapping film 200 may surround an entirety of the center portion, the one end portion and the other end portion of each the plurality of separators 120 in the second direction. Accordingly, since the wrapping film 200 may stably surround the stack 100, the electrodes 110 and the separators 120 in alignment may be more firmly fixed. Accordingly, it is possible to prevent deformation and damage of the separator 120, disruption of the alignment of the stack 100, and short circuit resulting therefrom.

According to embodiments of the present invention, the wrapping film 200 may be fused long in the second direction to the one end portion or the other end portion of at least a portion of the plurality of separators 120 in the third direction corresponding to the predetermined section S.

Accordingly, as the area where the wrapping film 200 is fused to the stack 100 or the number of separators 120 to which the wrapping film 200 is fused increases, the electrodes 110 and the separator 120 in alignment may be more firmly fixed. In addition, since entirety of the center portion, the one end portion and the other end portion of the separator 120 in the second direction surrounded by the wrapping film 200 is fused to the wrapping film 200 in the second direction, the electrodes 110 and the separators in alignment may be more firmly fixed. Thus, it is possible to prevent deformation and damage of the separator 120, disruption of the alignment of the stack 100, and short circuit resulting therefrom.

According to embodiments of the present invention, when the wrapping film 200 is be fused to the stack 100, at least a first portion P1 of the predetermined section S of one end portion of each of at least a portion of the plurality of separators 120 in the third direction may be bent to be closer to or to be in contact with each of plurality of adj acent separators 120 when the wrapping film 200 is be fused to the stack 100, and at least a second portion P2 of the predetermined section S of other end portion of each of at least a portion of the plurality of separators 120 in the third direction may be bent to be closer to or to be in contact with each of plurality of adjacent separators 120.

Accordingly, since the wrapping film 200 may surround an entirety of the center portion, the one end portion and the other end portion of each the plurality of separators 120 in the second direction by pressing and surrounding the plurality of separators 120 with the wrapping film 200, the electrodes 110 and the separators 120 in alignment may be more firmly fixed.

In addition, since the one end portion and the other end portion of the separator 120 in the third direction, more specifically, the entirety of the center portion, the one end portion and the other end portion in the second direction of the one end portion and the other end portion of the separator 120 in the third direction are fixed while being bent along the second direction, the pressure applied to the one side and the other side of the stack 100 in the third direction may be facilitatively absorbed.

In addition, since the one end portion and the other end portion of the separator 120 in the third direction, more specifically, the entirety of the center portion, the one end portion and the other end portion in the second direction of the one end portion or the other end portion of the separator 120 in the third direction, are placed close to the one end portion and the other end portion of the adjacent separator 120, the strength of the one side and the other side of the separator 120 in the third direction may increase. Thus, and the separators 120 may be protected, and it is possible to prevent deformation and damage of the separator 120, disruption of the alignment of the stack 100, and short circuit resulting therefrom.

In addition, even when the alignment of the stack 100 is disrupted, the electrodes 110 (e.g., a pair of electrodes disposed on the one side and the other side of the separator in the first direction) are blocked by one bent end portion or the other bent end portion of the separator 120 in the third direction, more specifically, by the center portion, the one end portion and the other end portion in the second direction of the one bent end portion or the other bent end portion of the separator 120 in the third direction, thereby greatly reducing the possibility of direct electrical connection between the electrodes 110 and the battery case. Thus, short circuit may be prevented.

Accordingly, in order to insulate the outermost electrode 110 of the stack 100 in the first direction from the battery case (not shown), the separator 120 disposed at the one end or the other end of the stack 100 in the first direction may be replaced with wrapping film 200. Thus, the thickness of the electrode assembly 10 may be reduced, thereby increasing the energy density of secondary batteries including the electrode assembly 10.

According to embodiments of the present invention, the stack 100 includes a plurality of unit cells C aligned and stacked in the first direction. Each of the plurality of unit cells C may include a portion of the plurality of electrodes 110 and a portion of the plurality of separators 120 stacked alternately. The portion of the plurality of electrodes 110 and the portion of the plurality of separators 120 constituting each of the plurality of unit cells C may be bonded to one another. The wrapping film 200 surrounds the stack 100 and may be fused to the stack 100 to fix the plurality of unit cells C.

Accordingly, since the electrode 110 and the separator 120 of each of the plurality of unit cells C constituting the stack 100 surrounded by and fused to the wrapping film 200 are bonded to each other in advance, the electrodes 110 and the separators 120 in alignment may be more firmly fixed, and safely protected. Therefore, it is possible to prevent deformation and damage of the separator 120, disruption of the alignment of the stack 100, and short circuit resulting therefrom.

According to embodiments of the present invention, fusion may be performed by thermocompression.

Accordingly, the wrapping film 200 may be facilitatively fused to the stack 100 with a simple configuration and at low cost.

According to embodiments of the present invention, the wrapping film 200 may be made of a material containing polyethylene terephthalate (PET) and ethylene vinyl acetate (EVA).

Accordingly, not only the fixation strength and bonding strength of the wrapping film 200 but also the heat exchange performance of the wrapping film 200 may be excellent. Thus, the electrodes 110 and the separators 120 in alignment may be firmly fixed and safely protected, and the stack 100 does not overheat despite being surrounded by the wrapping film 200 such that the performance of the secondary batteries does not deteriorate and the lifespan thereof may not be shortened. In addition, since the wrapping film 200 has excellent insulating performance, the outermost separator 120 of the stack 100 may be omitted, thereby reducing the thickness of the electrode assembly 10. In addition, since a commercially available inexpensive film may be used as the wrapping film 200, the electrode assembly 10 may be facilitatively manufactured and the manufacturing cost of the electrode assembly 10 may be reduced.

According to embodiments of the present invention, a bending resistance rigidity of the wrapping film 200 may be greater than those of the plurality of separators 120.

Accordingly, the wrapping film 200 may firmly and straightly fix the electrodes 110 and the separators 120 in alignment.

According to embodiments of the present invention, a manufacturing method S500 of electrode assembly includes: a stacking step S510 of forming a stack 100; and a wrapping step S520 of surrounding: the one side and the other side of the stack 100 in a first direction; and the one side and the other side of the stack 100 in a third direction with a wrapping film 200, and fusing the wrapping film 200 at least to the one side or the other side of the stack 100 in the first direction.

Accordingly, the electrode assembly 10 may be manufactured in which the electrodes 110 and the separators 120 in alignment may be firmly fixed, and be protected. Accordingly, it is possible to prevent deformation and damage of the separator 120, disruption of the alignment of the stack 100, and short circuit resulting therefrom.

According to embodiments of the present invention, the wrapping film 200 may include a first wrapping film 210 and a second wrapping film 220. The wrapping step S520 may include: a first wrapping step S522 of fusing the first wrapping film 210 to: one side of the stack 100 in the first direction; at least a portion of one side of the stack 100 in the third direction; and at least a portion of the other side of the stack 100 in the third direction, and a second wrapping step S524 of fusing the second wrapping film 220 to: the one side of the stack 100 in the first direction; and at least two end portions of the first wrapping film 210 on the one side and the other side of the stack 100 in the third direction after flipping the stack 100 to interchange the one side and the other side thereof in the first direction.

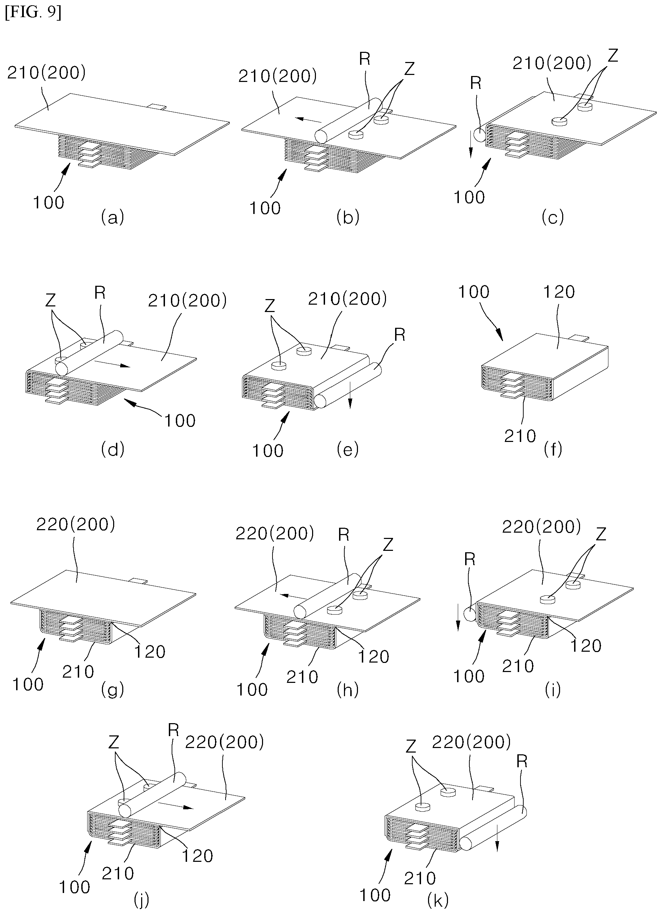

Accordingly, two wrapping films 210 and 220 may be used to surround and be fused to the stack 100. Here, the first wrapping step S522 ((a) to (e) in FIG. 9) for fusing the first wrapping film 210 and the second wrapping step S524 ((f) to (k) in FIG. 9) for fusing the second wrapping film 220 may correspond to one another in order except for the step (f) of flipping the stack 100. Thus, since the manufacturing process of the electrode assembly 10 is simplified, the manufacturing equipment for the electrode assembly 10 may be simplified and the manufacturing cost of the electrode assembly 10 may be reduced.

According to embodiments of the present invention, in the wrapping step S520, the roller R may be moved in the third direction on the one side of the stack 100 in the first direction to press and fuse the wrapping film 200 to the one side of the stack 100 in the first direction by thermocompression; and the roller R may be moved in the first direction on the one side and the other side of the stack 100 in the third direction to press and fuse the wrapping film 200 to at least a portion of the one side of the stack 100 in the third direction and at least a portion of the other side of the stack 100 in the third direction by thermocompression after the wrapping film 200 is placed on the one side of the stack 100 in the first direction, and pressing and fixing with a fixing member Z a predetermined area of the wrapping film 200 placed on the one side of the stack 100 in the first direction.

Accordingly, simply by fixing the wrapping film 200 with the fixing member Z on the one side of the stack 100 in the first direction, the wrapping film 200 may be fused to the one side of the stack 100 in the first direction and the one and the other sides of the stack 100 in the third direction. Thus, the alignment of the stack 100 in the first direction may be easily maintained when fusing the wrapping film 200 to the stack 100, and the wrapping film 200 may be fused to each of the one side of the stack 100 in the first direction and the one and the other sides of the stack 100 in the third direction with minimal fixing. Thus, since the manufacturing process of the electrode assembly 10 is simplified, the manufacturing equipment for the electrode assembly 10 may be simplified and the manufacturing cost of the electrode assembly 10 may be reduced.

In addition, since the wrapping film 200 is fused to the one side and the other side of the stack 100 in the third direction by pressing the wrapping film 200 while moving the roller R in the first direction, the one end portion and the other end portion of the separator 120 are naturally bent in the third direction to be close to or to be contact in contact with the one and the other end portions of the adjacent separator 120 in the third direction as the wrapping film 200 is fused. Thus, it is possible to prevent deformation and damage of the separator 120, disruption of the alignment of the stack 100, and short circuit resulting therefrom.

According to embodiments of the present invention, in the wrapping step S520, the roller R may be moved in the first direction on the one side and the other side of the stack 100 in the third direction to press and fuse the wrapping film 200 to the wrapping film 200 already fused to the one side and the other side of the stack 100 in the third direction by thermocompression after the wrapping film 200 is placed on the one side of the stack 100 in the first direction, and pressing and fixing with a fixing member Z a predetermined area of the wrapping film 200 placed on the one side of the stack 100 in the first direction.

Accordingly, the stack 100 may be firmly and facilitatively surrounded by the wrapping film 200.

According to embodiments of the present invention, in the wrapping step S520, the wrapping film 200 may be heated to a first temperature and fused to the stack 100. The first temperature may be higher than a second temperature to which one or more of the plurality of separators 120 are heated for bonding to one or more of the plurality of electrodes 110.

Accordingly, when the wrapping film 200 is fused to the separators 120 of the stack 100, the separators 120 may also be fused to the wrapping film 200 and/or the electrode 110, resulting in strong bonding between the wrapping film 200 and the stack 100. Thus, the wrapping film 200 may fix and protect the stack 100 without falling off from the stack 100, thereby preventing the separator 120 from deformation and damage, and the stack 100 from disruption of the alignment and short circuit resulting therefrom.

According to embodiments of the present invention, the first temperature may be equal to or higher than 110 degrees Celsius and lower than 160 degrees Celsius. The second temperature may be equal to or higher than 80 degrees Celsius and lower than 110 degrees Celsius.

Accordingly, the wrapping film 200 may fix and protect the stack 100 without falling off from the stack 100, thereby preventing the separator 120 from deformation and damage, and the stack 100 from disruption of the alignment and short circuit resulting therefrom.

In addition to the above-described effects, specific effects of the present invention will be described together with the following detailed description for implementing the present invention.

### [BRIEF DESCRIPTION OF DRAWINGS]

FIGS. 1 and 2 are a perspective view and a front view, respectively, illustrating a stack of electrodes and separators according to an embodiment of the present invention.
FIG. 3 is a perspective view illustrating a conventional electrode assembly with tape attached to the stack of FIGS. 1 and 2.
FIGS. 4 and 5 are a perspective view and a front view, respectively, illustrating an electrode assembly according to an embodiment of the present invention in which a wrapping film is fused to the stack of FIGS. 1 and 2.
FIG. 6 is a perspective view illustrating one of the separators of the electrode assembly of FIGS. 4 and 5.
FIG. 7 is a front view illustrating an electrode assembly according to another embodiment of the present invention.
FIG. 8 is a flowchart illustrating a manufacturing method of an electrode assembly according to an embodiment of the present invention.
FIG. 9 is a diagram sequentially illustrating the manufacturing method of the electrode assembly of FIGS. 4 and 5.

### [SPECIFIC DETAILS FOR CARRYING OUT THE INVENTION]

The above objects, features and advantages will be described later in detail with reference to the accompanying drawings, and accordingly, those skilled in the art to which the present invention belongs will be able to easily implement the technical idea of the present invention. In describing the present invention, when it is determined that the detailed description of the known technology related to the present invention may unnecessarily obscure the subject matter of the present invention, the detailed description will be omitted. Hereinafter, preferred embodiments according to the present invention will be described in detail with reference to the accompanying drawings. In the drawings, the same reference numerals are used to indicate the same or similar components.

Although "first", "second", and the like may be used to describe various components, these components are not limited by these terms. These terms are only used to distinguish one component from another component, and unless otherwise stated, the first component may be the second component, of course.

Throughout the specification, unless otherwise stated, each component may be singular or plural.

Hereinafter, the arrangement of an arbitrary component on the "upper portion (or lower portion)" or "upper (or lower)" of a component means that an arbitrary component is placed in contact with the upper (or lower) surface of the component. In addition, it may mean that other components may be interposed between the component and any component disposed on (or under) the component.

In addition, when a component is described as "linked", "coupled" or "connected" to another component, the components may be directly connected or connected to each other, but other components may be "interposed" between each component, or each component may be "linked", "coupled" or "connected" through other components.

Singular expressions used herein include plural expressions unless the context clearly dictates otherwise. In this application, terms such as "consisting of" or "comprising" should not be construed as necessarily including all of the various components or steps described in the specification. It should be construed that it may not include portion of the components or portion of the steps. or may further include additional components or steps.

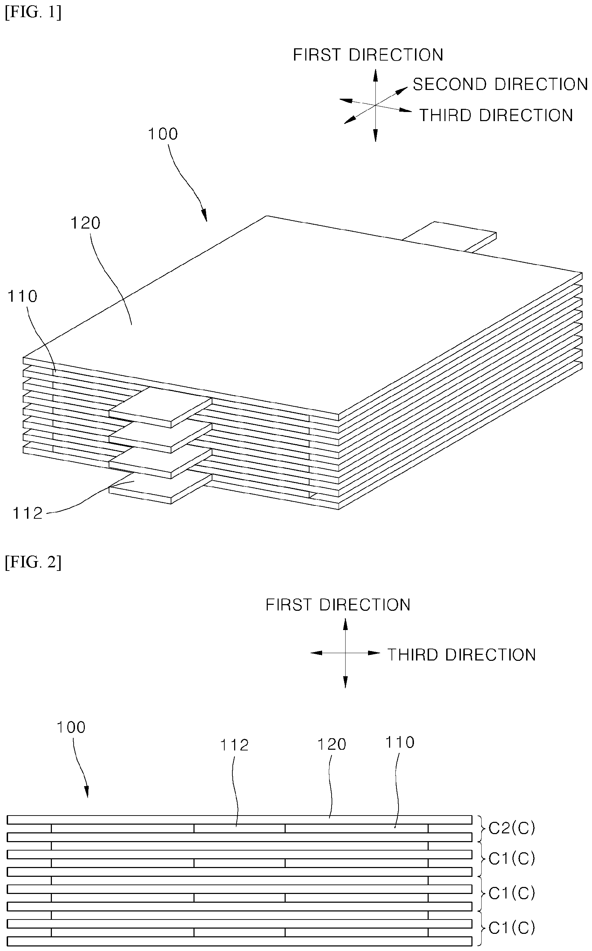

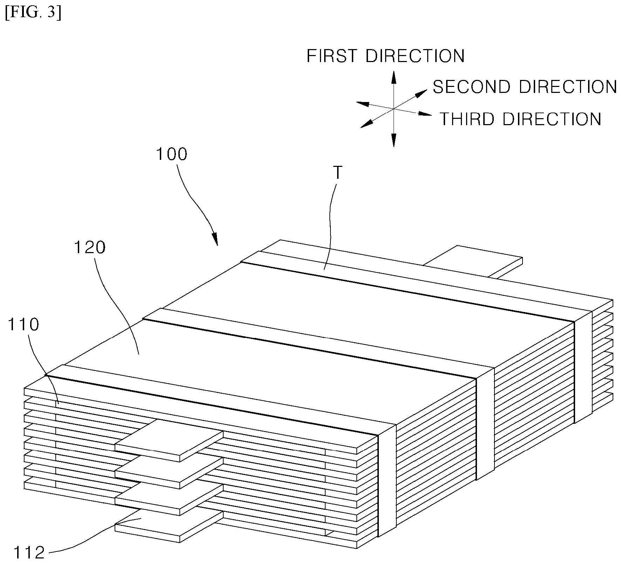

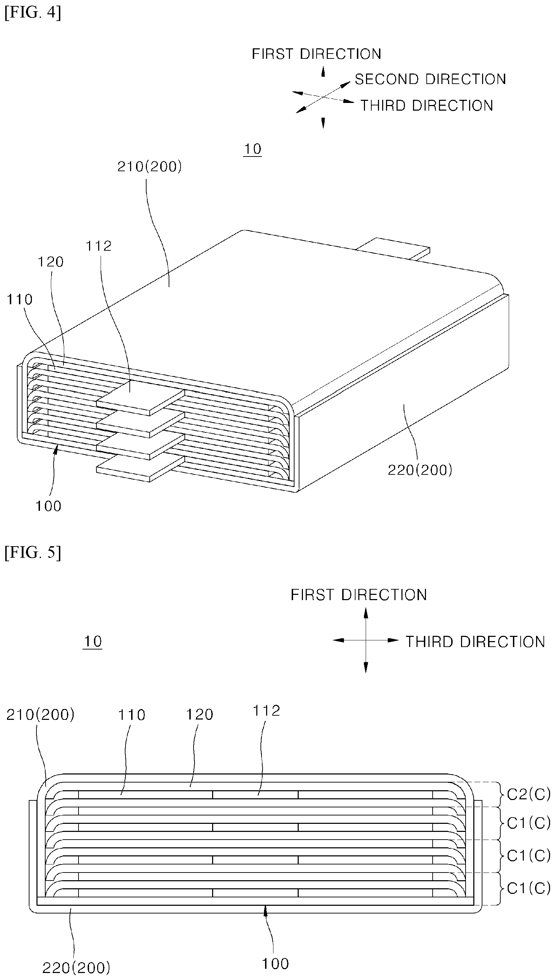

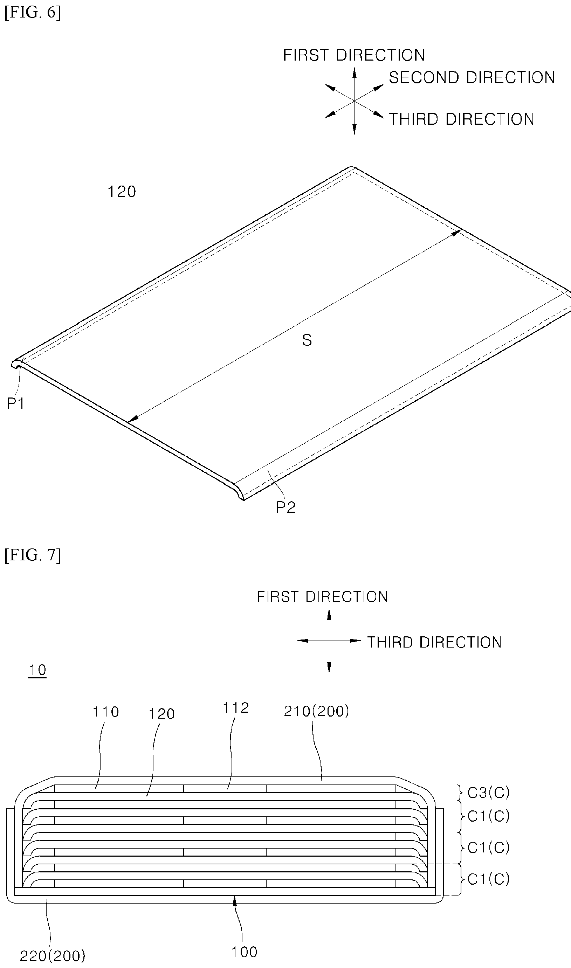

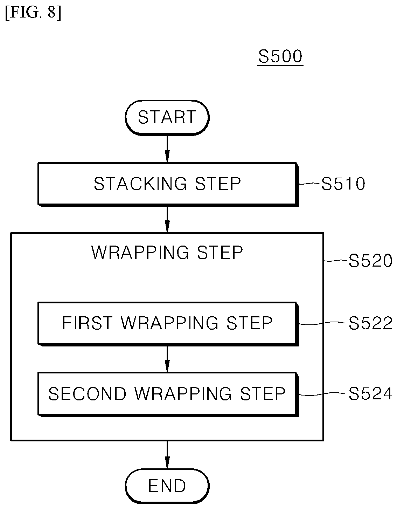

FIGS. 1 and 2 are a perspective view and a front view, respectively, illustrating a stack of electrodes and separators according to an embodiment of the present invention. FIG. 3 is a perspective view illustrating a conventional electrode assembly with tape attached to the stack of FIGS. 1 and 2. FIGS. 4 and 5 are a perspective view and a front view, respectively, illustrating an electrode assembly according to an embodiment of the present invention in which a wrapping film is fused to the stack of FIGS. 1 and 2. FIG. 6 is a perspective view illustrating one of the separators of the electrode assembly of FIGS. 4 and 5. FIG. 7 is a front view illustrating an electrode assembly according to another embodiment of the present invention. FIG. 8 is a flowchart illustrating a manufacturing method of an electrode assembly according to an embodiment of the present invention. FIG. 9 is a diagram sequentially illustrating the manufacturing method of the electrode assembly of FIGS. 4 and 5.

### [CONVENTIONAL ELECTRODE ASSEMBLY]

Referring to FIGS. 1 to 3, a conventional electrode assembly may include a stack 100 and a tape T (FIG. 3). Secondary batteries (not shown) may be formed by accommodating the electrode assembly in a battery case, injecting electrolyte into the battery case, and sealing the battery case. Hereinafter, the stack 100 and the tape T will be described.

The stack 100 may include a plurality of electrodes 110 and a plurality of separators 120.

The stack 100 may be formed by alternately stacking the plurality of electrodes 110 and the plurality of separators 120 in a first direction. That is, the plurality of electrodes 110 and the plurality of separators 120 constituting the stack 100 may be alternately stacked in the first direction (e.g., upward and downward directions). Additionally, the stack 100 may be formed by aligning and alternately stacking the plurality of electrodes 110 and the plurality of separators 120 in the first direction. That is, the plurality of electrodes 110 and the plurality of separators 120 constituting the stack 100 may be aligned and stacked.

Meanwhile, the stack 100 may include a plurality of unit cells C. The plurality of unit cells C constituting the stack 100 may be aligned and stacked in the first direction. The plurality of unit cells C may be one of two types, for example, mono cell C1 and half cell C2 (FIG. 2).

Each of the plurality of unit cells C may include a portion of the plurality of electrodes 110 and a portion of the plurality of separators 120 stacked alternately (FIG. 2). For example, the mono cell C1 may be a unit cell C in which a separator 120, an electrode 110 (e.g., a cathode), a separator 120 and an electrode 110 (e.g., an anode) are sequentially stacked, and the half cell C2 may be a unit cell C in which a separator 120, an electrode 110, (e.g., a cathode) and a separator 120 are sequentially stacked.

The electrode 110 and the separator 120 constituting each unit cell C may be bonded to each other.

An example of a manufacturing method of a mono cell C1 according to the prior art is as follows.

While the lower electrode 110 is move by a conveyor belt, etc., an upper separator 120 and a lower separator 120 are stacked on the upper surface and the lower surface of the lower electrode 110 (one side surface and the other side surface in the first direction), respectively, and, thereafter, the upper electrode 110 is further stacked on the top. A laminating process is then performed wherein heat and pressure are applied to the plurality of stacked electrodes 110 and the plurality of stacked separators 120. By performing the laminating process, the electrode 110 and the separator 120 may be bonded to each other to form a solid mono cell C1.

The manufacturing method of mono cell C1 may be applied by analogy to that of half cell C2.

For example, the half cell C2 may be stacked on one side of the mono cell C1 in the first direction in a manner that the electrode 110 at one end (e.g., upper end) of the mono cell C1 in the first direction is not in direct contact with the battery case (not shown). Since the plurality of separators 120 are stacked on both of the one end portion and the other end portion of the half cell C2 in the first direction, the half cell C2 may be insulated from the battery case.

The tape T may be attached to the stack 100. Here, the tape T may be attached while surrounding the stack 100. The tape T may fix the stack 100 in alignment.

However, when the tape T is attached, the separators 120 are partially bent by the tape T, causing the separator 120 or the electrode 110 to be damaged or short-circuited. Additionally, during the electrolyte injection process or degassing process, the tape T may be easily separated from the stack 100, causing the separator 120 to be deformed and a short circuit to occur.

Accordingly, a novel method is required to fix the stack 100 in alignment.

### [ELECTRODE ASSEMBLY ACCORDING TO AN EMBODIMENT OF THE PRESENT INVENTION]

Referring to FIGS. 4 and 5, the electrode assembly 10 according to an embodiment of the present invention may include a stack 100 and a wrapping film 200. As described above, secondary batteries (not shown) may be formed when the electrode assembly 10 is accommodated in the battery case (not shown) and the battery case is sealed after the electrolyte is injected into the battery case. Hereinafter, the stack 100 and wrapping film 200 will be described.

The stack 100 is as described above (FIGS. 1 and 2).

The wrapping film 200 may surround the stack 100. The wrapping film 200 may be fused to the stack 100 to fix the plurality of electrodes 110 and the plurality of separators 120 that constitutes the stack 100. Specifically, the wrapping film 200 may fix the plurality of electrodes 110 and the plurality of separators 120 in alignment.

Here, the fusion may refer to melting the base material (wrapping film) and bonding the same to the object (stack or separator).

Accordingly, as the wrapping film 200 surrounds and is fused to the stack 100, the electrodes 110 and the separators 120 in alignment may be firmly fixed and be protected. Accordingly, it is possible to prevent deformation and damage of the separator 120, disruption of the alignment of the stack 100, and short circuit resulting therefrom. In particular, even when a swelling phenomenon occurs where the electrode 110 swells after electrolyte wetting, the wrapping film 200 may fix and protect the stack 100 without falling off from the stack 100 thereby preventing the separator 120 from deformation and damage, and the stack 100 from disruption of the alignment and short circuit resulting therefrom.

In addition, since the electrodes 110 and the separators 120 in alignment may be firmly fixed by the wrapping film 200, the stack 100 may be prevented from bending when the electrode assembly 10 is transported. Accordingly, it is possible to prevent deformation and damage of the separator 120, and disruption of the alignment of the stack 100.

The fusion may be performed by a thermocompression method, ultrasonic method, etc. Among these methods, the wrapping film 200 may be fused to the stack 100 by the thermocompression method.

Accordingly, the wrapping film 200 may be facilitatively fused to the stack 100 with a simple configuration and at low cost.

The wrapping film 200 may be made of a material containing polyethylene terephthalate (PET) and ethylene vinyl acetate (EVA). For example, the wrapping film 200 may be a dual layer film in which an ethylene vinyl acetate (EVA) layer is laminated on a polyethylene terephthalate (PET) layer. Such dual layer film may be formed by heat-compressing ethylene vinyl acetate (EVA) on a polyethylene terephthalate (PET) film or melt-coating ethylene vinyl acetate (EVA) resin. Such dual layer films are widely used in coating films, printing materials or labels.

Accordingly, not only the fixation strength and bonding strength of the wrapping film 200 but also the heat exchange performance of the wrapping film 200 may be excellent. Thus, the electrodes 110 and the separators 120 in alignment may be firmly fixed and safely protected, and the stack 100 does not overheat despite being surrounded by the wrapping film 200 such that the performance of the secondary batteries does not deteriorate and the lifespan thereof may not be shortened. In addition, since the wrapping film 200 has excellent insulating performance, the outermost separator 120 of the stack 100 may be omitted, thereby reducing the thickness of the electrode assembly 10. In addition, since a commercially available inexpensive film may be used as the wrapping film 200, the electrode assembly 10 may be facilitatively manufactured and the manufacturing cost of the electrode assembly 10 may be reduced.

The wrapping film 200 may have greater bending resistance rigidity than the separator 120. For example, the wrapping film 200 made of a material containing polyethylene terephthalate (PET) and ethylene vinyl acetate (EVA) has greater bending resistance rigidity at the same thickness than the separator 120 made of polyethylene (PE).

Accordingly, the wrapping film 200 may firmly and straightly fix the electrodes 110 and the separators 120 in alignment.

Meanwhile, the wrapping film 200 made of a material containing polyethylene terephthalate (PET) and ethylene vinyl acetate (EVA) may cost less than the separator 120 made of a polyethylene (PE) material. Unlike the wrapping film 200, the separator 120 cannot be made of materials containing polyethylene terephthalate (PET) and ethylene vinyl acetate (EVA).

The electrode tab 112 of each of the plurality of electrodes 110 are on one side (e.g., front side) or the other side (e.g., rear side) of the stack 100 in the second direction (e.g., front and rear directions) that intersects the first direction (e.g., upward and downward directions). Here, the wrapping film 200 may surround: the one side (e.g., upper side) and the other side (e.g., lower side) of the stack 100 in the first direction; and the one side (e.g., left side) and the other side (e.g., right side) of the stack 100 in the third direction (e.g., left and right directions) that intersects the first direction and the second direction. Additionally, the wrapping film 200 may be fused to at least the one side and/or the other side of the stack 100 in the first direction.

Accordingly, the stack 100 may be easily surrounded by the wrapping film 200, avoiding the electrode tabs 112 of the electrodes 110, and may be facilitatively fused to the stack 100. Thus, the electrode assembly 10 may be facilitatively manufactured and the manufacturing cost of the electrode assembly 10 may be reduced.

The wrapping film 200 may be fused to: the one side and/or the other side of the stack 100 in the first direction; and the one side and/or the other side of the stack 100 in the third direction. For example, the wrapping film 200 may be fused to: the upper surface of the separator 120 disposed at the top side (upper end) of the stack 100 in the first direction (upward and downward directions); and the lower surface of the separator 120 disposed at the bottom side (lower end) of the stack 100 in the first direction.

Accordingly, as the area where the wrapping film 200 is fused to the stack 100 or the number of separators 120 to which the wrapping film 200 is fused increases, the electrodes 110 and the separators 120 in alignment may be more firmly fixed. Thus, it is possible to prevent deformation and damage of the separator 120, disruption of the alignment of the stack 100, and short circuit resulting therefrom.

Meanwhile, as shown in the drawing, when the one end (left side) portion and the other end (right side) portion of the separator 120 disposed at the one end (upper end) of the stack 100 in the first direction are bent to the other end (downward) of the first direction, the center portion of the separator 120 disposed at the one end (upper end) of the stack 100 may constitute the one side (upper side) of the stack 100 in the first direction, and the one end (left side) portion and the other end (right side) portion of the separator 120 disposed at the one end (upper end) of the stack 100 may constitute the one side (left side) and the other side (right side) of the stack 100 in the third direction.

Referring further to FIG. 6, the wrapping film 200 may extend in the second direction to surround an area corresponding to a predetermined section S (FIG. 6) of each of the plurality of separators 120 in the second direction. The predetermined section S may be a section extending from a center to the one end portion and the other end portion of each the plurality of separators 120 in the second direction.

For example, as shown, the predetermined section S extends from the center of the separator 120 to the one end portion and the other end portion of the separator 120 in the second direction to include the entire area of the separator 120 in the second direction. However, it is not limited to such configuration. That is, as another example, unlike the drawing, the predetermined section S may extend from the center of the separator 120 toward the one end portion and the other end portion of the separator 120 in the second direction to a point within the separator 120 spaced apart from the one end portion and the other end portion of the separator 120 by a predetermined distance.

Accordingly, the wrapping film 200 may surround the entirety of the center portion, the one end portion and the other end portion of each of the plurality of separators 120 in the second direction. Thus, since the wrapping film 200 may stably surround the stack 100, the electrodes 110 and the separators 120 in alignment may be more firmly fixed. Accordingly, it is possible to prevent deformation and damage of the separator 120, disruption of the alignment of the stack 100, and short circuit resulting therefrom.

The wrapping film 200 is fused to the one end portion or the other end portion of at least a portion of the plurality of separators 120 in the third direction by being fused to the portion P1 or P2 (FIG. 6) corresponding to the predetermined section S of the one end portion or the other end portion in the third direction.

Accordingly, as the area where the wrapping film 200 is fused to the stack 100 or the number of separators 120 to which the wrapping film 200 is fused increases, the electrodes 110 and the separators 120 in alignment may be more firmly fixed. Moreover, since the entirety of the center portion, the one end portion and the other end portion of each of the plurality of separators 120 in the second direction are surrounded by the wrapping film 200, the electrodes 110 and the separators 120 in alignment may be more firmly fixed. Thus, it is possible to prevent deformation and damage of the separator 120, disruption of the alignment of the stack 100, and short circuit resulting therefrom.

The wrapping film 200 may include a first wrapping film 210 and a second wrapping film 220 (FIGS. 4 and 5).

The first wrapping film 210 may be bent to surround: the one side of the stack 100 in the first direction; at least a portion of the one side of the stack 100 in the third direction; and at least a portion of the other side of the stack 100 in the third direction. The first wrapping film 210 may be fused to at least the one side of the stack 100 in the first direction.

The second wrapping film 220 may be bent to surround: the other side of the stack 100 in the first direction; at least a portion of the one side of the stack 100 in the third direction; and at least a portion of the other side of the stack 100 in the third direction. The second wrapping film 220 may have two end portions overlapping two end portions of the first wrapping film 210 in the first direction on the one side and the other side of the stack 100 in the third direction. The second wrapping film 220 may be fused to: the other side of the stack 100 in the first direction; and at least two overlapping end portions of the first wrapping film 210.

Accordingly, by surrounding the stack 100 with two wrapping films 210 and 220 and fusing the two wrapping films 200 to the stack 100, the manufacturing of the electrode assembly 10 with a simple configuration may be facilitated at low cost.

The first wrapping film 210 may be fused to the one side of the stack 100 in the first direction, at least a portion of the one side of the stack 100 in the third direction, and at least a portion of the other side of the stack 100 in the third direction.

For example, the first wrapping film 210 is bent to be fused to the separator 120 disposed at one end (top) of the stack 100 in the first direction (upward and downward directions), particularly, to the one side of the stack 100 in the first direction, at least a portion of the one side of the stack 100 in the third direction and at least a portion of the other side of the stack 100 in the third direction (FIG.S. 4 and 5). In addition, the first wrapping film 210 may be fused to the one end portion and the other end portion of the plurality of stacked separators 120 in the third direction, particularly, to at least a portion of the one side (left side) and a portion of the other side (right side) of the stack 100 in the third direction.

Accordingly, as the area where the wrapping film 200 is fused to the stack 100 or the number of separators 120 to which the wrapping film 200 is fused increases, the electrodes 110 and the separators 120 in alignment may be more firmly fixed. Thus, it is possible to prevent deformation and damage of the separator 120, disruption of the alignment of the stack 100, and short circuit resulting therefrom.

Each of the plurality of separators 120 may extend further than the plurality of electrodes 110 adjacent to each of the plurality of separators 120 in the one direction and the other direction of the third direction (FIGS. 1 and 2).

One end portion and the other end portion of at least a portion of the plurality of separators 120 in the third direction may be bent to be closer to or to be in contact with one end portion and the other end portion of plurality of adjacent separators 120 in the third direction when the wrapping film 200 is fused to the stack 100 (FIGS. 4 and 5).

Accordingly, since the wrapping film 200 surrounds the stack 100 while pressing the separator 120, the electrodes 110 and the separators 120 in alignment may be more firmly fixed. In addition, since the one end portion and the other end portion of the separator 120 in the third direction are fixed in a bent state, the pressure applied to the one side and the other side of the stack 100 in the third direction may be facilitatively absorbed. Since the one end portion and the other end portion of the separator 120 are placed close to the one end portion and the other end portion of the adjacent separator 120 in the third direction, the strength of the one side and the other side of the stack 100 in the third direction may increase. Thus, the stack 100 and the separators 120 may be protected. Accordingly, it is possible to prevent deformation and damage of the separator 120, disruption of the alignment of the stack 100, and short circuit resulting therefrom. In particular, even when a swelling phenomenon occurs where the electrode 110 swells after electrolyte wetting, the wrapping film 200 may fix and protect the stack 100 without falling off from the stack 100 thereby preventing the separator 120 from deformation and damage, and the stack 100 from disruption of the alignment and short circuit resulting therefrom. Additionally, the stack 100 may be prevented from bending when the electrode assembly 10 is transported. Accordingly, it is possible to prevent deformation and damage of the separator 120, and disruption of the alignment of the stack 100.

In addition, even when the alignment of the stack 100 is disrupted, the electrodes 110 (e.g., a pair of electrodes disposed on the one side and the other side of the separator in the first direction) are blocked by one bent end portion or the other bent end portion of the separator 120 in the third direction, thereby greatly reducing the possibility of direct electrical connection between the electrodes 110 and the battery case. Thus, short circuit may be prevented.

As described above, the wrapping film 200 may extend in the second direction to surround the area corresponding to the predetermined section S of each of the plurality of separators 120. Here, as described above, the predetermined section S may be a section extending from a center to the one end portion and the other end portion of each the plurality of separators 120 in the second direction.

In this case, when the wrapping film 200 is fused to the stack 100, the first portion P1 of the predetermined section S of the one end portion of the separator 120 of the plurality of separators 120 in the third direction may be bent to be close to or to be in contact with an adjacent separator 120, and the second portion P2 of the predetermined section S of the other end portion of the separator 120 of the plurality of separators 120 in the third direction may be bent to be close to or to be in contact with the adjacent separator 120 (FIGS. 4, 5 and 6).

Accordingly, since the wrapping film 200 surrounds the stack 100 while pressing the separator 120 by surrounding the entirety of the center portion, the one end portion and the other end portion of the separator 120 in the second direction, the electrodes 110 and the separators 120 in alignment may be more firmly fixed. In addition, since the one end portion and the other end portion of the separator 120 in the third direction are fixed in a bent state by fixing the entirety of the center portion, the one end portion and the other end portion in the second direction of the one end portion and the other end portion of the separator 120 in the third direction, the pressure applied to the one side and the other side of the stack 100 in the third direction may be facilitatively absorbed. In addition, since the one end portion and the other end portion of the separator 120 in the third direction are placed close to the one end portion and the other end portion of the adjacent separator 120 in the third direction by placing the entirety of the center portion, the one end portion and the other end portion in the second direction of the one end portion and the other end portion of the separator 120 in the third direction close to the one end portion and the other end portion of the adjacent separator 120 in the third direction, the strength of the one side and the other side in the third direction may increase. Thus, the separators 120 may be protected. Accordingly, it is possible to prevent deformation and damage of the separator 120, disruption of the alignment of the stack 100, and short circuit resulting therefrom.

In addition, even when the alignment of the stack 100 is disrupted, the electrodes 110 (e.g., a pair of electrodes disposed on the one side and the other side of the separator in the first direction) are blocked by one bent end portion or the other bent end portion of the separator 120 in the third direction, more specifically by the center portion, the one end portion and the other end portion in the second direction of the one bent end portion or the other bent end portion of the separator 120 in the third direction, thereby greatly reducing the possibility of direct electrical connection between the electrodes 110 and the battery case. Thus, short circuit may be prevented.

When the wrapping film 200 is fused to the stack 100, the entirety of the one end portion or the entirety of the other end portion of each of the plurality of separators 120 consecutively stacked in the first direction with the electrode 110 therebetween is bent one direction or the other direction of the first direction.

For example, as shown in FIG. 5, the entirety of the one end portion and the other end portion of each of the seven separators 120 consecutively stacked in the first direction with the electrode 110 therebetween is bent the other direction of the first direction (downward).

Accordingly, since the wrapping film 200 surrounds the stack 100 while pressing the continuously stacked separators 120 in a similar direction, the electrodes 110 and the separators 120 in alignment are more firmly fixed. In addition, since the one end portion or the other end portion of the continuously stacked separators 120 in the third direction may be concentrated in the third direction, the strength of the one side and the other side of the stack 100 in the third direction is increased. Thus, the stack 100 and separators 120 may be protected. Accordingly, it is possible to prevent deformation and damage of the separator 120, disruption of the alignment of the stack 100, and short circuit resulting therefrom.

Meanwhile, the stack 100 may include the plurality of unit cells C aligned and stacked in the first direction (FIGS. 2, 5 and 7). Each of the plurality of unit cells C may include a portion of the plurality of electrodes 110 and a portion of the plurality of separators 120 stacked alternately which constitute the stack 100. The portion of the plurality of electrodes 110 and the portion of the plurality of separators 120 constituting each of the plurality of unit cells C may be bonded to one another. Specific details regarding the plurality of unit cell C are as described above.

The wrapping film 200 may surround and be fused to the stack 100 to fix the plurality of unit cells C.

Accordingly, since the electrode 110 and the separator 120 of each of the plurality of unit cells C constituting the stack 100 surrounded by and fused to the wrapping film 200 are bonded to each other in advance, the electrodes 110 and the separators 120 in alignment may be more firmly fixed, and safely protected. Therefore, it is possible to prevent deformation and damage of the separator 120, disruption of the alignment of the stack 100, and short circuit resulting therefrom.

### [ELECTRODE ASSEMBLY ACCORDING TO ANOTHER EMBODIMENT OF THE PRESENT INVENTION]

Referring to FIG. 7, the electrode 110 may be located at the one end or the other end of the stack 100 in the first direction of electrode assembly according to another embodiment of the present invention.

For example, unlike in FIG. 5, the electrode 110 may be disposed at the one end of the stack 100 in the first direction of FIG. 7 instead of the separator 120. With the unit cell C as a reference, unlike in FIG. 5, a modified cell C3 having the separator 120 and electrode 110 (e.g., cathode) sequentially stacked therein may be disposed instead of the half cell C2. That is, the separator 120 at the one end or the other end of the stack 100 in the first direction may be omitted.

The wrapping film 200 may be fused to one side surface or the other side surface of each of the plurality of electrodes 110 in the first direction located at the one end or the other end of the stack 100 in the first direction.

Accordingly, in order to insulate the outermost electrode 110 of the stack 100 in the first direction from the battery case (not shown), the separator 120 disposed at the one end or the other end of the stack 100 in the first direction may be replaced with wrapping film 200. Thus, the thickness of the electrode assembly 10 may be reduced, thereby increasing the energy density of secondary batteries including the electrode assembly 10.

### [MANUFACTURING METHOD OF ELECTRODE ASSEMBLY]

Referring to FIG. 9, a manufacturing method S500 of an electrode assembly according to an embodiment may include a stacking step S510 and a wrapping step S520.

In the stacking step S510, stack 100 may be formed. For example, the plurality of electrodes 110 and the plurality of separators 120 may be stacked alternately in the first direction. Here, the plurality of electrodes 110 and the plurality of separators 120 may be stacked in aligned manner.

Specifically, for example, a plurality of unit cells C wherein electrodes 110 and separators 120 are alternately stacked in the first direction may be aligned and stacked. Here, as described above, the electrode 110 and the separator 120 constituting each of the plurality of unit cells C may be bonded to each other in advance. Referring to FIG. 8, in the wrapping step S520 ((a) to (k) in FIG. 9), wrapping film 200 may surround and be fused to the stack 100. Specifically, the wrapping film 200 may surround the one side and the other side of the stack 100 in the first direction and the one side and the other side of the stack 100 in the third direction, and the wrapping film 200 is fused at least to the one side and the other side of the stack 100 in the first direction.

Accordingly, the electrode assembly 10 wherein the electrodes 110 and the separators 120 in alignment may be firmly fixed and protected may be manufactured. Thus, it is possible to prevent deformation and damage of the separator 120, disruption of the alignment of the stack 100, and short circuit resulting therefrom.

As described above, the wrapping film 200 may include the first wrapping film 210 and the second wrapping film 220.

The wrapping step S520 may include a first wrapping step S522 ((a) to (e) in FIG. 9) and a second wrapping step S524 ((f) to (k) in FIG. 9).

In the first wrapping step S522 ((a) to (e) in FIG. 9), the first wrapping film 210 may be fused to the one side of the stack 100 in the first direction, at least a portion of the one side of the stack 100 in the third direction, and at least a portion of the other side of the stack 100 in the third direction.

Specifically, for example, as shown in (a), (b) and (d) of FIG. 9, the first wrapping film 210 may be placed on the one side of the stack 100 in the first direction, and then be fused to the one side of the stack 100 in the first direction. In addition, as shown in (c) of FIG. 9, the first wrapping film 210 may be placed on the one side of the stack 100 in the third direction, and then be fused to the one side of the stack 100 in the third direction. In addition, as shown in (e) of FIG. 9, the first wrapping film 210 may be placed on the other side of the stack 100 in the third direction, and then be fused to the other side of the stack 100 in the third direction.

In the second wrapping step S524 ((f) to (k) in FIG. 8), as shown in (f) of FIG. 9, the second wrapping film 220 may be fused to the one side of the stack 100 in the first direction and to at least the two end portions of the first wrapping film 210 on the one side and the other side of the stack 100 in the third direction after flipping the stack 100 to interchange the one side and the other side thereof in the first direction.

Specifically, for example, as shown in (g), (h) and (j) of FIG. 9, the second wrapping film 220 may be placed on and fused to the one side of the stack 100 in the first direction (the other side of the stack 100 in the first direction before the stack 100 flipped). In addition, as shown in (i) of FIG. 9, the second wrapping film 220 may be placed on the one side of the stack 100 in the third direction in a manner that the end portion of the first wrapping film 210 overlaps the second wrapping film 220 in the first direction, and may be then fused to the first wrapping film 210. Here, the second wrapping film 220 may be fused to a portion of the one side of the stack 100 in the third direction where the first wrapping film 210 is not fused. In addition, as shown in (k) of FIG. 9, the second wrapping film 220 may be placed on the other side of the stack 100 in the third direction in a manner that the end portion of the first wrapping film 210 overlaps the second wrapping film 220 in the first direction, and may be then fused to the first wrapping film 210. Here, the second wrapping film 220 may be fused to a portion of the other side of the stack 100 in the third direction where the first wrapping film 210 is not fused.

Accordingly, two wrapping films 210 and 220 may be used to surround and be fused to the stack 100. HI, (a) to (e) in FIG. 9 of the first wrapping step S522 for fusing the first wrapping film 210 sequentially correspond to (f) to (k) in FIG. 9 of the second wrapping step S524 for fusing the second wrapping film 220 except for the step (f) of flipping 100. Thus, since the manufacturing process of the electrode assembly 10 is simplified, the manufacturing equipment for the electrode assembly 10 may be simplified and the manufacturing cost of the electrode assembly 10 may be reduced.

In the wrapping step S520, after placing the wrapping film 200 on the one side of the stack 100 in the first direction ((a) and (g)), and pressing and fixing with the fixing member Z a predetermined portion of the wrapping film 200 placed on the one side of the stack 100 in the first direction ((b), (d), (h) and (j)), the roller R may be moved on the one side of the stack 100 in the first direction and the wrapping film 200 is pressed to be fused to the one side of the stack 100 in the first direction by thermocompression ((b), (d), (h) and (j)), and the roller R may be moved on the one and the other sides of the stack 100 in the third direction and the wrapping film 200 is pressed to be fused at least to a portion of the one side of the stack 100 in the third direction and a portion of the other side of the stack 100 in the third direction by thermocompression ((c) and (e)).

Accordingly, simply by fixing the wrapping film 200 with the fixing member Z on the one side of the stack 100 in the first direction, the wrapping film 200 may be fused to the one side of the stack 100 in the first direction and the one and the other sides of the stack 100 in the third direction. Thus, the alignment of the stack 100 in the first direction may be easily maintained when fusing the wrapping film 200 to the stack 100, and the wrapping film 200 may be fused to each of the one side of the stack 100 in the first direction and the one and the other sides of the stack 100 in the third direction with minimal fixing. Thus, since the manufacturing process of the electrode assembly 10 is simplified, the manufacturing equipment for the electrode assembly 10 may be simplified and the manufacturing cost of the electrode assembly 10 may be reduced.

In addition, since the wrapping film 200 is fused to the one side and the other side of the stack 100 in the third direction by pressing the wrapping film 200 while moving the roller R in the first direction, the one end portion and the other end portion of the separator 120 are naturally bent in the third direction to be close to or to be contact in contact with the one and the other end portions of the adjacent separator 120 in the third direction as the wrapping film 200 is fused. Thus, it is possible to prevent deformation and damage of the separator 120, disruption of the alignment of the stack 100, and short circuit resulting therefrom.

Meanwhile, in the wrapping step S520, after fixing the predetermined portion of the wrapping film 200 placed on the one side of the stack 100 in the first direction is by pressing with the fixing member Z ((h) and (j)), the roller R may be moved on the one and the other sides of the stack 100 in the third direction and the wrapping film 200 may be pressed to be fused to the wrapping film 200 already fused to the one and the other sides of the stack 100 in the third direction by thermocompression ((i) and (k)). For example, as described above, the second wrapping film 220 may be fused to the first wrapping film 210.

Accordingly, the stack 100 may be firmly and facilitatively surrounded by the wrapping film 200.

In the wrapping step S520, a process of heating the wrapping film 200 may be performed. For example, after heating the roller R, the wrapping film 200 may be heated and pressed with the heated roller R. Thus, the wrapping film 200 may be subjected to thermocompression (thermal fusion) to be fused the stack 100.

In the wrapping step S520, the wrapping film 200 may be fused to the stack 100 while being heated to a first temperature. The first temperature may be higher than a second temperature at which the separator 120 is heated to be bonded to the electrode 110 (e.g., lamination bonding).

Accordingly, when the wrapping film 200 is fused to the separators 120 of the stack 100, the separators 120 may also be fused to the wrapping film 200 and/or the electrode 110, resulting in strong bonding between the wrapping film 200 and the stack 100. Thus, the wrapping film 200 may fix and protect the stack 100 without falling off from the stack 100, thereby preventing the separator 120 from deformation and damage, and the stack 100 from disruption of the alignment and short circuit resulting therefrom. Here, the first temperature may be equal to or higher than 110 degrees Celsius and equal to or lower than 160 degrees Celsius, and the second temperature may be equal to or higher than 80 degrees Celsius and equal to or lower than 110 degrees Celsius For example, the first temperature may be approximately equal to or higher than 120 degrees Celsius and equal to or lower than 140 degrees Celsius, and the second temperature may be approximately 100 degrees Celsius.

Accordingly, the wrapping film 200 may fix and protect the stack 100 without falling off from the stack 100, thereby preventing the separator 120 from deformation and damage, and the stack 100 from disruption of the alignment and short circuit resulting therefrom.

It should be understood that the described embodiments are illustrative in all respects and not restrictive, and the scope of the present invention will be indicated by the following claims rather than the described detailed description. And the meaning and scope of the claims to be described later, as well as all changes and modifications derived from the equivalent concept should be interpreted as being included in the scope of the present invention.

Although the present invention has been described with reference to the exemplified drawings, it is to be understood that the present invention is not limited to the embodiments and drawings disclosed in this specification, and those skilled in the art will appreciate that various modifications are possible without departing from the scope and idea of the present invention. Further, although the operating effects according to the configuration of the present invention are not explicitly described while describing an embodiment of the present invention, it should be appreciated that predictable effects are also to be recognized by the configuration.

### [DESCRIPTION OF REFERENCE NUMERALS]

| | | | |
|---|---|---|---|
| 10: | electrode assembly | | |
| 100: | stack | 110: | electrode |
| 112: | electrode tab | 120: | separator |
| 200: | wrapping film | | |
| 210: | first wrapping film | 220: | second wrapping film |
| C: | unit cell | | |

## Claims

1. An electrode assembly comprising:
a stack 100 formed by aligning and alternately stacking a plurality of electrodes 110 and a plurality of separators 120 in a first direction; and
a wrapping film 200 surrounding and fused to the stack 100 to fix the plurality of electrodes 110 and the plurality of separators 120,
wherein electrode tabs 112 of the plurality of electrodes 110 are disposed at one side or other side of the stack 100 in a second direction intersecting with the first direction, and
the wrapping film 200 surrounds: one side and other side of the stack 100 in the first direction; and one side and other side of the stack 100 in a third direction intersecting the first direction and the second direction, and is fused to at least the one side or the other side of the stack 100 in the first direction.

2. The electrode assembly of claim 1, wherein the wrapping film 200 is fused to the one side or the other side of the stack 100 in the first direction and to the one side or the other side of the stack 100 in the third direction.

3. The electrode assembly of claim 1 or claim 2, wherein the wrapping film 200 comprises a first wrapping film 210 and a second wrapping film 220,
wherein the first wrapping film 210 is bent to surround: the one side of the stack 100 in the first direction; at least a portion of the one side of the stack 100 in the third direction; and at least a portion of the other side of the stack 100 in the third direction, and is fused to at least the one side of the stack 100 in the first direction, and
the second wrapping film 220 is bent to surround: the other side of the stack 100 in the first direction; at least a portion of the one side of the stack 100 in the third direction; and at least a portion of the other side of the stack 100 in the third direction, and has two end portions overlapping two end portions of the first wrapping film 210 in the first direction on the one side and the other side of the stack 100 in the third direction, and is fused to: at least the other side of the stack 100 in the first direction and two overlapping end portions of the first wrapping film 210.

4. The electrode assembly of claim 3, wherein the first wrapping film 210 is fused to the one side of the stack 100 in the first direction, at least a portion of the one side of the stack 100 in the third direction, and at least a portion of the other side of the stack 100 in the third direction.

5. The electrode assembly of any one of claims 1 to 4, wherein each of the plurality of separators 120 extends further than the plurality of electrodes 110 adjacent to each of the plurality of separators 120 in one direction and other direction of the third direction, and
one end portion and other end portion of at least a portion of the plurality of separators 120 in the third direction are bent to be closer to or to be in contact with one end portion and other end portion of plurality of adjacent separators 120 in the third direction when the wrapping film 200 is fused to the stack 100.

6. The electrode assembly of any one of claims 1 to 5, wherein each of the plurality of separators 120 extends further than the plurality of electrodes 110 adjacent to each of the plurality of separators 120 in one direction and other direction of the third direction, and
one end portion or other end portion of each of two or more of the plurality of separators 120 in the third direction stacked consecutively in the first direction with one or more of the plurality of electrodes 110 therebetween is bent altogether in one direction or other direction of the first direction when the wrapping film 200 is fused to the stack 100,

7. The electrode assembly of any one of claims 1 to 6, wherein the wrapping film 200 extends in the second direction to surround an area corresponding to a predetermined section S of each of the plurality of separators 120 in the second direction, and
the predetermined section S is a section extending from a center to one end portion and other end portion of each the plurality of separators 120 in the second direction.

8. The electrode assembly of claim 7, wherein the wrapping film 200 is fused long in the second direction to one end portion or other end portion of at least a portion of the plurality of separators 120 in the third direction corresponding to the predetermined section S.

9. The electrode assembly of claim 7 or claim 8, wherein, when the wrapping film 200 is fused to the stack 100, at least a first portion P1 of the predetermined section S of one end portion of each of at least a portion of the plurality of separators 120 in the third direction is bent to be closer to or to be in contact with each of plurality of adjacent separators 120, and at least a second portion P2 of the predetermined section S of other end portion of each of at least a portion of the plurality of separators 120 in the third direction is bent to be closer to or to be in contact with each of plurality of adjacent separators 120.

10. The electrode assembly of any one of claims 1 to 9, wherein the plurality of electrodes 110 are located at one end or other end of the stack 100 in the first direction, and
the wrapping film 200 is fused to one side surface or other side surface of each of the plurality of electrodes 110 in the first direction located at the one end or the other end of the stack 100 in the first direction.

11. The electrode assembly of any one of claims 1 to 10, wherein the stack 100 comprises a plurality of unit cells C aligned and stacked in the first direction,
each of the plurality of unit cells C is constituted by a portion of the plurality of electrodes 110 and a portion of the plurality of separators 120 stacked alternately,
the portion of the plurality of electrodes 110 and the portion of the plurality of separators 120 constituting each of the plurality of unit cells C are bonded to one another, and
the wrapping film 200 surrounds the stack 100 and is fused to the stack 100 to fix the plurality of unit cells C.

12. The electrode assembly of any one of claims 1 to 11, wherein fusion is performed by thermocompression.

13. The electrode assembly of any one of claims 1 to 12, wherein the wrapping film 200 is made of a material containing polyethylene terephthalate (PET) and ethylene vinyl acetate (EVA).

14. The electrode assembly of any one of claims 1 to 13, wherein a bending resistance rigidity of the wrapping film 200 is greater than those of the plurality of separators 120.

15. A manufacturing method of electrode assembly of any one of claims 1 to 14, the method comprising:
a stacking step S510 of forming a stack 100; and
a wrapping step S520 of surrounding: one side and other side of the stack 100 in a first direction; and one side and other side of the stack 100 in a third direction with a wrapping film 200, and fusing the wrapping film 200 at least to the one side or the other side of the stack 100 in the first direction.

16. The method of claim 15, wherein the wrapping film 200 comprises a first wrapping film 210 and a second wrapping film 220,
wherein the wrapping step S520 comprises:
a first wrapping step S522 of fusing the first wrapping film 210 to: one side of the stack 100 in the first direction; at least a portion of one side of the stack 100 in the third direction; and at least a portion of the other side of the stack 100 in the third direction, and
a second wrapping step S524 of fusing the second wrapping film 220 to: the one side of the stack 100 in the first direction; and at least two end portions of the first wrapping film 210 on the one side and the other side of the stack 100 in the third direction after flipping the stack 100 to interchange the one side and the other side thereof in the first direction.

17. The method of claim 15 or claim 16, wherein the wrapping step S520 comprises: moving the roller R in the third direction on the one side of the stack 100 in the first direction to press and fuse the wrapping film 200 to the one side of the stack 100 in the first direction by thermocompression; and moving the roller R in the first direction on the one side and the other side of the stack 100 in the third direction to press and fuse the wrapping film 200 to at least a portion of the one side of the stack 100 in the third direction and at least a portion of the other side of the stack 100 in the third direction by thermocompression, after placing the wrapping film 200 on the one side of the stack 100 in the first direction, and pressing and fixing with a fixing member Z a predetermined area of the wrapping film 200 placed on the one side of the stack 100 in the first direction.

18. The method of any one of claims 15 to 17, wherein the wrapping step S520 comprises: moving the roller R in the first direction on the one side and the other side of the stack 100 in the third direction to press and fuse the wrapping film 200 to the wrapping film 200 already fused to the one side and the other side of the stack 100 in the third direction by thermocompression after placing the wrapping film 200 on the one side of the stack 100 in the first direction, and pressing and fixing with a fixing member Z a predetermined area of the wrapping film 200 placed on the one side of the stack 100 in the first direction.

19. The method of any one of claims 15 to 18, wherein the wrapping film 200 is heated to a first temperature and fused to the stack 100 in the wrapping step S520,
the first temperature being higher than a second temperature whereto one or more of the plurality of separators 120 are heated for bonding to one or more of the plurality of electrodes 110.

20. The method of claim 19, wherein the first temperature is equal to or higher than 110 degrees Celsius and lower than 160 degrees Celsius, and the second temperature is equal to or higher than 80 degrees Celsius and lower than 110 degrees Celsius.
